Europäisches Patentamt

European Patent Office

Office européen des brevets

(19)

(11) Numéro de publication: **0 156 687**
**A1**

(12) ## DEMANDE DE BREVET EUROPEEN

(21) Numéro de dépôt: **85400341.5**

(22) Date de dépôt: **22.02.85**

(51) Int. Cl.⁴: **G 02 B 6/34**

(30) Priorité: **24.02.84 FR 8402812**

(43) Date de publication de la demande:
**02.10.85** Bulletin **85/40**

(84) Etats contractants désignés:
**AT BE CH DE GB IT LI LU NL SE**

(71) Demandeur: **SOCIETE D'OPTIQUE, PRECISION
ELECTRONIQUE ET MECANIQUE - SOPELEM
102 rue Chaptal
F-92300 Levallois-Perret(FR)**

(72) Inventeur: **Baluteau, Jean-Michel
77 Allée de Chartres
F-93190 Livry Gargan(FR)**

(72) Inventeur: **Saint Sevin, Michel
1 bis rue des 3 Soeurs
F-93220 Gagny(FR)**

(72) Inventeur: **Delaby, Alain
45 Boulevard de la Chapelle
F-75010 Paris(FR)**

(74) Mandataire: **Phélip, Bruno et al,
c/o Cabinet Harlé & Phélip 21, rue de la Rochefoucauld
F-75009 Paris(FR)**

(54) **Dispositif de couplage de guides d'onde pour le multiplexage ou le démultiplexage en longueur d'onde.**

(57) La présente invention se rapporte à un dispositif de couplage pour le multiplexage ou le démultiplexage entre un guide d'onde formé d'au moins une fibre optique et transmettant un domaine relativement large de longueur d'onde et deux guides d'onde formés chacun d'au moins une fibre optique et transmettant des domaines relativement réduits et séparés de longueur d'onde.

Il est caractérisé par le fait qu'il comporte un premier objectif convergent (4) et un second objectif convergent (5) disposés l'un par rapport à l'autre de manière qu'ils aient théoriquement un plan focal commun et un élément séparateur (7) présentant une surface dichroïque (71) située théoriquement dans ledit plan focal commun et que les guides d'onde (1, 2 et 3) sont disposés de manière que le guide d'onde (1) transmettant le domaine double de longueur d'onde et que le guide d'onde (2) transmettant un domaine simple de longueur d'onde aient leurs extrémités situées théoriquement dans le plan focal objet du premier objectif (4) et que le second guide d'onde (3) transmettant un domaine simple de longueur d'onde ait son extrémité située théoriquement dans le plan focal image du second objectif (5).

Fig 1

1

# Dispositif de couplage de guides d'onde pour le multiplexage ou le démultiplexage en longueur d'onde

La présente invention se rapporte à un dispositif de couplage pour le multiplexage ou le démultiplexage entre un guide d'onde formé d'au moins une fibre optique et transmettant un domaine relativement large de longueur d'onde et deux guides d'onde formés chacun d'au moins une fibre optique et transmettant des domaines relativement réduits et séparés de longueur d'onde.

Dans les réseaux de télécommunications à fibres optiques, on cherche à faire passer dans ces fibres deux domaines de longueur d'onde. On interpose dans la chaine de transmission, des dispositifs réalisant le multiplexage ou le démultiplexage en longueur d'onde.

La présente invention a pour but de fournir un dispositif de multiplexage ou de démultiplexage dans lequel les pertes énergétiques sont minimisées et dans lequel la séparation des domaines de longueur d'onde est réalisée de manière très efficace. Le dispositif présente des avantages du point de vue de la construction, de la fiabilité et des réglages. Les objectifs utilisés dans le dispositif n'ont pas besoin d'être achromatiques.

Le dispositif est caractérisé par le fait qu'il comporte un premier objectif convergent et un second objectif convergent disposés l'un par rapport à l'autre de manière qu'ils aient théoriquement un plan focal commun et un élément séparateur présentant une surface dichroïque située dans ledit plan focal commun et par le fait que les guides d'onde sont disposés de manière que le guide d'onde transmettant le double domaine et que le premier guide d'onde transmettant un simple domaine aient leurs extrémités situées théoriquement dans le plan focal objet du premier objectif et que le second guide d'onde transmettant un simple domaine ait son extrémité située théoriquement dans le plan focal image du second objectif.

Selon une caractéristique, l'extrémité du guide d'onde transmettant le double domaine est symétrique, par rapport à l'axe optique des objectifs, de l'extrémité du guide d'onde transmettant un simple domaine et est symétrique par rapport au foyer commun de l'extrémité du second guide d'onde transmettant un simple domaine.

Selon une autre caractéristique, l'élément séparateur est constitué par une lame à faces parallèles dont une face, située dans le plan focal commun, présente un traitement dichroïque laissant passer un domaine de longueur d'onde et réfléchissant un autre domaine de longueur d'onde.

Selon une autre caractéristique, l'un au moins des objectifs présents du côté des fibres optiques, une face plane juxtaposée à un bloc de verre faisant la jonction avec les extrémités des fibres.

Selon une autre caractéristique, l'élément séparateur présente sur la face écartée du plan focal commun, un traitement de blocage pour arrêter les longueurs d'onde du simple domaine réfléchi vers le premier guide d'onde.

L'invention va maintenant être décrite avec plus de détails en se référant à un mode de réalisation donné à titre d'exemple et représenté par les dessins annexés sur lesquels :

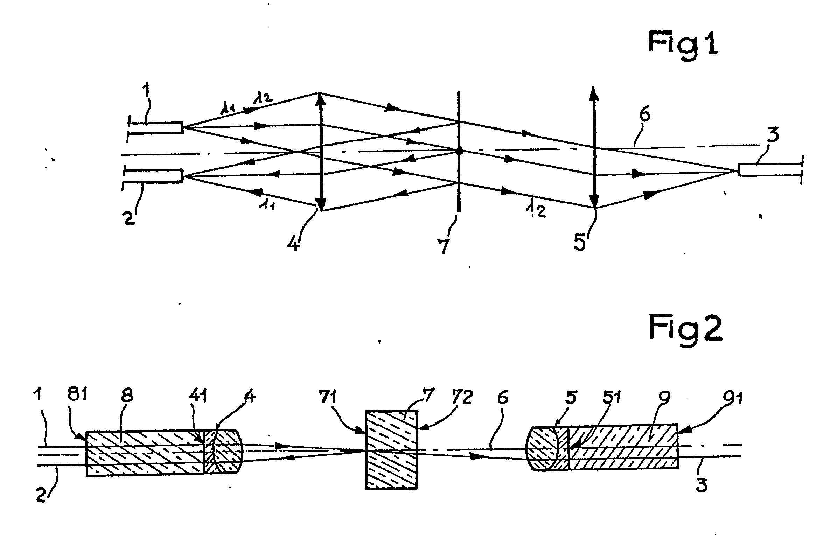

- la figure 1 représente, en lentilles minces, un schéma du dispositif.

- La figure 2 représente, en lentilles épaisses, le dispositif de la figure 1.

Le dispositif représenté par les dessins couple un guide d'onde 1 formé d'au moins une fibre optique et transmettant un double domaine de longueur d'onde à deux guides d'onde 2 et 3 formés chacun d'au moins une fibre optique et transmettant des domaines réduits et séparés de longueur d'onde. Chaque guide d'onde 1, 2 ou 3 peut être constitué par une seule fibre optique ou par une pluralité de fibres optiques. Pour la suite de la description on désignera par fibre optique chaque guide d'onde 1, 2 ou 3.

Dans le mode de réalisation qui est représenté la fibre 1 est émettrice, les fibres 2 et 3 étant réceptrices. Si les fibres 2 et 3 étaient émettrices, la fibre 1 serait alors réceptrice.

La fibre 1 est couplée aux fibres 2 et 3 par l'intermédiaire d'un objectif convergent 4 et d'un objectif convergent 5 et d'un élément séparateur 7 à surface dichroïque.

Le premier objectif 4 et le second objectif 5 sont centrés sur un axe optique 6 et sont séparés l'un par rapport à l'autre de manière que le plan focal image de l'un coïncide théoriquement avec le plan focal objet de l'autre. De préférence l'objectif 5 a la même puissance que l'objectif 4.

L'élément séparateur dichroïque 7 présente une surface plane dichroïque 71 qui réfléchit la lumière d'un premier domaine simple de longueur d'onde allant (ou venant) à la fibre 2 et qui laisse passer la lumière d'un second domaine simple de longeur d'onde allant (ou venant) à la fibre 3. Dans le cas où la fibre 1 est émettrice, l'élément séparateur dichroïque 7 scinde le faisceau incident à double domaine de longueur d'onde issu de la fibre 1 en deux faisceaux dont les domaines de longueur d'onde sont distincts et qui sont dirigés sur les fibres 2 et 3. Inversement dans

3

le cas où les fibres 2 et 3 sont émettrices, l'élément séparateur dichroïque combine les faisceaux venant des fibres 2 et 3 dont les domaines de longueur d'onde sont distincts en un seul faisceau à double domaine de longueur d'onde qui est dirigé sur la fibre réceptrice 1.

Cet élément séparateur est constitué par une lame à faces parallèles dont la face 71 située dans le plan focal commun présente le traitement dichroïque décrit précédemment. La face 72 écartée du plan focal commun présente un traitement de blocage destiné à arrêter les longueurs d'onde appartenant au simple domaine de longueur d'onde réflèchi vers la fibre 2. En variante, ce traitement de blocage pourrait être situé sur une des faces de l'objectif ou de la lame de verre 9.

La fibre 1 transmettant le double domaine de longueur d'onde est symétrique par rapport à l'axe optique 6, de l'extrémité de la fibre 2 transmettant le simple domaine de longueur d'onde. Elle est symétrique par rapport au foyer commun, de l'extrémité de la fibre optique 3 transmettant un simple domaine de longueur d'onde (dans le cas où les focales des objectifs 4 et 5 sont identiques).

Les fibres 1 et 2 ont leurs extrémités situées théoriquement dans le plan focal objet de l'objectif 4. La fibre 3 a son extrémité située théoriquement dans le plan focal image de l'objectif 5. Chaque objectif 4 ou 5 est séparé de l'élément séparateur 7 par un intervalle d'air et il est constitué de préférence par au moins deux lentilles.

Chaque objectif 4 ou 5 présente, du côté des fibres, une face plane 41 ou 42. Des blocs de verre 8 et 9 sont collés aux faces planes des objectifs 4 et 5 en faisant la jonction entre les objectifs et les extrémités des fibres 1 et 2 ou 3. Les extrémités des fibres 1 et 2 sont collées sur le bloc de verre 8 et de même l'extrémité de la fibre 3 est collée sur le bloc de verre 9.

Dans ce cas le bloc de verre 8 peut être déplacé transversalement pour régler la conjugaison optique entre la fibre 1 et la fibre 2. De même le bloc de verre 51 peut être déplacé transversalement pour régler la conjugaison optique entre la fibre 1 et la fibre 3. En variante, les extrémités des fibres 1 et 2 pourraient être fixées sur une monture mécanique susceptible d'être déplacée transversalement par rapport au bloc de verre 8. De même l'extrémité de la fibre 3 pourrait être fixée à une monture susceptible d'être déplacée transversalement par rapport au bloc de verre 9.

Un traitement de blocage pour arrêter les longueurs d'onde appartenant au simple domaine de longueur d'onde transmis vers la fibre 3 est

4

prévu entre l'extrémité de la fibre 2 et le bloc de verre 8.

L'épaisseur du bloc de verre 8 est réglée pour que la focalisation s'effectue sur la face avant 81 de ce bloc de verre. De même l'épaisseur du bloc de verre 9 est réglée pour que la focalisation s'effectue sur la face arrière 91 de ce bloc de verre. Du fait de cette disposition, les objectifs 4 et 5 n'ont pas besoin d'être achromatiques.

Le fonctionnement du dispositif va maintenant être expliqué.

La fibre 1 émet un double domaine de longueur d'onde $(\lambda 1 + \lambda 2)$. Le faisceau lumineux issu de cette fibre 1 est collimaté par l'objectif 4 vers l'élément séparateur 7. L'élément séparateur 7 qui est transparent pour un domaine de longueur d'onde repéré $\lambda 2$ laisse passer un faisceau de ce domaine de longueur d'onde vers l'objectif 5. L'élément séparateur 7 qui réflèchit un second domaine de longueur d'onde repéré $\lambda 1$ réflèchit un faisceau de ce domaine de longueur d'onde vers l'objectif 4. L'objectif 5 focalise le faisceau venant de l'élément séparateur 7 sur l'extrémité de la fibre 3. L'objectif 4 focalise le faisceau réflèchi par l'élément séparateur 7 sur l'extrémité de la fibre 2. La fibre émettrice 1 est couplée aux fibres réceptrices 2 et 3.

Le flux émis par un point de la fibre émettrice 1 se situe dans un cône dont l'axe est normal à la surface émettrice de cette fibre. De même chaque fibre de réception 2 ou 3 ne transmet que les rayons arrivant dans un cône dont l'axe est normal à la surface de réception de cette fibre. Du fait que les foyers intermédiaires des objectifs 4 et 5 sont théoriquement confondus, tous les axes des cônes de lumière émis par les points de la surface émettrice d'une fibre 1 arrivent perpendiculairement à la surface réceptrice de la fibre 3. Du fait que la surface dichroïque 71 de l'élément séparateur 7 est théoriquement positionnée dans le plan focal de l'objectif 4, tous les cônes de lumière émis par les points de la surface émettrice de la fibre 1 arrivent perpendiculairement à la surface réceptrice de la fibre 2. Le dispositif ainsi décrit constitue un système télécentrique tel que la pupille d'entrée et les pupilles de sortie sont rejetées à l'infini, la pupille intermédiaire étant située dans le plan correspondant au plan focal des objectifs 4 et 5 et à la surface dichroïque 71 de l'élément séparateur 7.

Le couplage optimum est obtenu lorsque les extrémités des fibres optiques 1, 2 et 3 sont situées dans les plans focaux des objectifs 4 et 5 et que les plans focaux des objectifs 4 et 5 sont théoriquement confondus et que la surface dichroïque 71 de l'élément séparateur 7 est située dans

5

ce plan focal commun. Si le positionnement des extrémités des fibres optiques par rapport aux plans focaux et si la coïncidence des plans focaux et
de la surface dichroïque ne sont pas réalisés à quelques pourcent près, les
pertes de couplage deviennent importantes et le couplage n'est plus admissible.

Il est bien entendu que l'on peut sans sortir du cadre de l'invention imaginer des variantes et des perfectionnements de détail et de même
envisager l'emploi de moyens équivalents.

6

## REVENDICATIONS

1. Dispositif de couplage pour le multiplexage ou le démultiplexage entre un guide d'onde (1) formé d'au moins une fibre optique et transmettant un double domaine de longueur d'onde et deux guides d'onde (2 et 3) formés chacun d'au moins une fibre optique et transmettant des domaines simples et distincts de longueur d'onde, caractérisé par le fait qu'il comporte un premier objectif convergent (4) et un second objectif convergent (5) disposés l'un par rapport à l'autre de manière qu'ils aient théoriquement un plan focal commun et un élément séparateur (7) présentant une surface dichroïque (71) située théoriquement dans ledit plan focal commun et que les guides d'onde (1, 2 et 3) sont disposés de manière que le guide d'onde (1) transmettant le domaine double de longueur d'onde et que le guide d'onde (2) transmettant un domaine simple de longueur d'onde aient leurs extrémités situées théoriquement dans le plan focal objet du premier objectif (4) et que le second guide d'onde (3) transmettant un domaine simple de longueur d'onde ait son extrémité située théoriquement dans le plan focal image du second objectif (5).

2. Dispositif selon la revendication 1, caractérisé par le fait que les extrémités du guide d'onde (1) transmettant le domaine double de longueur d'onde est symétrique, par rapport à l'axe optique (6) des objectifs, de l'extrémité du guide d'onde (2) transmettant un domaine simple de longueur d'onde et est symétrique par rapport au foyer commun des objectifs, de l'extrémité du second guide d'onde (3) transmettant un domaine simple de longueur d'onde.

3. Dispositif selon l'une quelconque des revendications précédentes, caractérisé par le fait que l'élément séparateur (7) est constitué par une lame à faces parallèles dont une face (71) qui est située dans le plan focal commun présente un traitement dichroïque laissant passer un domaine simple de longueur d'onde et réfléchissant un autre domaine simple de longueur d'onde.

4. Dispositif selon l'une quelconque des revendications précédentes, caractérisé par le fait que l'un au moins des objectifs (4 ou 5) présentent du côté des fibres, une face plane juxtaposée à un bloc de verre (8 ou 9) faisant la jonction avec les extrémités des fibres.

5. Dispositif selon la revendication 4, caractérisé par le fait que l'un au moins des blocs de verre est susceptible d'être déplacé transversalement par rapport à l'axe optique.

6. Dispositif selon l'une quelconque des revendications précédentes,

caractérisé par le fait que l'élément séparateur (7) présente sur la face (72) écartée du plan focal commun des objectifs, un traitement de blocage pour arrêter les longueurs d'onde du domaine simple de longueurs d'onde réfléchi, par la face dichroïque 71 vers le premier guide d'onde (2).

7. Dispositif selon l'une quelconque des revendications précédentes,

caractérisé par le fait qu'il comporte entre les extrémités du premier guide d'onde (2) transmettant un domaine simple de longueur d'onde et le bloc de verre (8) faisant la jonction avec l'objectif (4), un traitement de blocage arrêtant les longueurs d'onde appartenant au domaine simple de longueur d'onde pour lequel la face dichroïque (71) de l'élément séparateur est transparente.

Fig 1

Fig 2

0156687

## RAPPORT DE RECHERCHE EUROPEENNE

Office européen
des brevets

### DOCUMENTS CONSIDERES COMME PERTINENTS

| Catégorie | Citation du document avec indication, en cas de besoin. des parties pertinentes | Revendication concernée | CLASSEMENT DE LA DEMANDE (Int. Cl.4) |
|---|---|---|---|
| Y | PATENTS ABSTRACTS OF JAPAN, vol. 5, no. 154 (P-82)[826], page 48 P 82; & JP - A - 56 85 701 (FUJITSU K.K.) 13-07-1981 * En entier * | 1-4 | G 02 B 6/34 |
| Y | ELECTRONICS INTERNATIONAL, vol. 55, no. 20, 6 octobre 1982, pages 45-48, New York, US; C. BARNEY: "Fiber optics: Multiplexer works with four signals" * Page 49, colonne 3, lignes 45-48; figure a * | 1-4 | |
| A | PATENTS ABSTRACTS OF JAPAN, vol. 6, no. 62 (P-137)[1040], 25 août 1982, page 152 P 137; & JP - A - 57 81 227 (FUJITSU K.K.) 21-05-1982 * En entier * | 1-4 | |

DOMAINES TECHNIQUES RECHERCHES (Int. Cl.4)

G 02 B

Le présent rapport de recherche a été établi pour toutes les revendications

| Lieu de la recherche | Date d'achèvement de la recherche | Examinateur |
|---|---|---|
| LA HAYE | 03-06-1985 | MORRELL D.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant